# EUROPÄISCHE PATENTSCHRIFT

(11) **EP 1 105 906 B1**
(45) Veröffentlichungstag und Bekanntmachung des Hinweises auf die Patenterteilung: **17.08.2005**
(21) Anmeldenummer: 00949092.1
(22) Anmeldetag: 14.06.2000
(51) Int. Cl.: H01J 9/34, H01J 5/58, H01J 61/32

(54) **VERFAHREN ZUR SOCKELUNG EINER ELEKTRISCHEN LAMPE**
METHOD FOR MOUNTING THE BASE OF AN ELECTRIC LAMP
PROCEDE POUR CULOTTER UNE LAMPE ELECTRIQUE

(30) Priorität: 23.06.1999 DE 19928419
(43) Veröffentlichungstag der Anmeldung: 13.06.2001
(73) Patentinhaber: Patent-Treuhand-Gesellschaft für Elektrische Glühlampen mbH, 81543 München (DE)
(72) Erfinder: PILHÖFER,Bernd, D-86836 Graben (DE); DIEKMANN, Rüdiger, D-89407 Dillingen (DE)
(86) Internationale Anmeldenummer: PCT/DE2000/001935
(87) Internationale Veröffentlichungsnummer: WO 2001/001437

(56) Entgegenhaltungen:
- US-A- 4 171 499
- US-A- 5 289 079

## Beschreibung

Die Erfindung betrifft ein Verfahren zur Sockelung einer elektrischen Lampe gemäß des Oberbegriffs des Patentanspruchs 1.

### I. Stand der Technik

Ein derartiges Verfahren zur Sockelung einer elektrischen Lampe ist beispielsweise in der Patentschrift US4171499 A und in der europäischen Patentschrift EP 0 455 884 B1 offenbart. Diese Patentschrift beschreibt die Sockelung einer einseitig gesockelten Hochdruckentladungslampe, bei der eine rohrartige Verlängerung des Entladungsgefäßes mittels eines zur hochfrequenzinduzierten Erwärmung tauglichen Mittels in einem thermoplastischen Kunststoffsockelteil eingeschmolzen wird.

### II. Darstellung der Erfindung

Es ist die Aufgabe der Erfindung, ein gegenüber dem Stand der Technik vereinfachtes Verfahren zur Sockelung einer elektrischen Lampe anzugeben.

Diese Aufgabe wird erfindungsgemäß durch die kennzeichnenden Merkmale des Patentanspruchs 1 gelöst. Besonders vorteilhafte Ausführungen der Erfindung sind in den Unteransprüchen beschrieben.

Das erfindungsgemäße Sockelungsverfahren ist auf elektrische Lampen anwendbar, die einen mit einem thermoplastischen Kunststoffsockelteil versehenen Lampensokkel und mindestens ein Lampengefäß, das mit dem thermoplastischen Kunststoffsokkelteil durch eine Schmelzverbindung verbunden ist, besitzen. Erfindungsgemäß wird diese Schmelzverbindung durch Erhitzen von Abschnitten oder Teilen des mindestens einen Lampengefäßes auf eine Temperatur, die größer oder gleich der Erweichungstemperatur und vorteilhafterweise größer oder gleich der Schmelztemperatur des thermoplastischen Kunststoffsockelteilmaterials ist, und durch Einführen der erhitzten Lampengefäßabschnitte in mindestens eine Aufnahme des Kunststoffsokkelteils, deren Abmessungen kleiner als die entsprechenden Außenabmessungen der in der Aufnahme zu befestigenden Lampengefäßabschnitte sind, hergestellt. Beim Einführen der erhitzten Lampengefäßabschnitte in die mindestens eine Aufnahme erweicht beziehungsweise schmilzt das Kunststoffsockelteilmaterial durch den Kontakt mit den erhitzten Lampengefäßabschnitten und der erweichte Kunststoff beziehungsweise die Kunststoffschmelze wird durch die eindringenden Lampengefäßabschnitte verdrängt. Auf diese Weise wird die anfangs zu enge Aufnahme aufgeweitet und an die Außenabmessungen der in sie eindringenden Lampengefäßabschnitte angepaßt. Nach dem Erstarrenlassen des erweichten Kunststoffes beziehungsweise der Kunststoffschmelze ist das mindestens eine Lampengefäß formschlüssig von dem erstarrten Kunststoffmaterial umgeben. Das erstarrte Kunststoffmaterial bildet vorteilhafterweise einen ringförmigen, das mindestens eine Lampengefäß formschlüssig umgebenden Kragen. Der ringförmige Kragen vergrößert die Kontaktfläche zwischen dem mindestens einen Lampengefäß und dem Kunststoffsockelteil und erhöht damit die Stabilität der Schmelzverbindung. Damit das Herstellen der erfindungsgemäßen Schmelzverbindung möglichst wenig Zeit beansprucht, werden die Lampengefäßabschnitte vorzugsweise auf eine Temperatur erhitzt, die sogar deutlich über der Schmelztemperatur des thermoplastischen Kunststoffsockelteilmaterials aber auch deutlich unterhalb der Schmelztemperatur des Entladungsgefäßes liegt.

Um bei dem erfindungsgemäßen Einschmelzungsverfahren die Gefahr des Auftretens von Sprüngen in dem mindestens einen Lampengefäß zu vermindern, wird das Kunststoffsockelteil vor dem Einführen der erhitzten Lampengefäßabschnitte in die mindestens eine Aufnahme vorteilhafterweise auf eine Temperatur, die oberhalb der Raumtemperatur und unterhalb der Erweichungstemperatur des Kunststoffsockelteilmaterials liegt, vorgewärmt. Das Erstarrenlassen des Kunststoffes wird vorteilhafterweise durch eine Kühlung des Einschmelzungsbereiches, vorzugsweise mittels eines Luftstromes, beschleunigt. Zur Erhöhung der Festigkeit der Schmelzverbindung, wird das mindestens eine Lampengefäß mit mindestens einer Sicke versehen und die erhitzten Lampengefäßabschnitte werden derart in die mindestens eine Aufnahme eingeführt, daß die mindestens eine Sicke nach dem Erstarrenlassen des Kunststoffes in dem erstarrten Kunststoffmaterial formschlüssig eingebettet ist. Vorteilhafterweise ist die mindestens eine Aufnahme als Vertiefung oder Durchbruch in dem thermoplastischen Kunststoffsockelteil und das mindestens eine Lampengefäß U-förmig ausgebildet, wobei die Schenkel des mindestens einen U-förmigen Lampengefäßes in einer Vertiefung oder einem Durchbruch des Kunststoffsockelteils eingeschmolzen werden.

Besonders vorteilhaft läßt sich das erfindungsgemäße Sockelungsverfahren bei Leuchtstofflampen, die einen Kunststoffsockel und ein Entladungsgefäß, das aus mindestens einem U-förmigen Glasrohr besteht, anwenden. Üblicherweise wird bei derartigen Leuchtstofflampen, die häufig auch als Kompakte Leuchtstofflampen bezeichnet werden, das Entladungsgefäß mittels eines Kittringes in einer Vertiefung oder einem Durchbruch eines kappenartigen Kunststoffsockelteils fixiert. Eine solche Lampe ist beispielsweise in der Patentschrift EP 0 452 743 B1 beschrieben. Die Anwendung des erfindungsgemäßen Sockelungsverfahrens auf die vorgenannten Leuchtstofflampen ermöglicht es, auf den Kitt zu verzichten. Die erfindungsgemäße Leuchtstofflampe zeichnet sich dementsprechend durch einen Lampensockel aus, der mindestens ein thermoplastisches Kunststoffsockelteil besitzt, das eine unlösbare Schmelzverbindung mit den Schenkeln mindestens eines U-förmigen Glasrohres, das Bestandteil des Entladungsgefäßes der Lampe ist, aufweist. Vorteilhafterweise ist das mindestens eine thermoplastische Kunststoffsockelteil als Kappe ausgebildet, durch den die Schenkel des mindestens einen U-förmigen Glasrohres hindurchgeführt sind und der auf der Innenseite ringförmige Kragen besitzt, die die Schenkel des mindestens einen U-förmigen Glasrohres formschlüssig umgeben. Die Kappe verschließt vorteilhafterweise einen topfartig ausgebildeten Lampensockel, in dem ein Vorschaltgerät zum Betrieb der Leuchtstofflampe angeordnet ist.

### III. Beschreibung des bevorzugten Ausführungsbeispiels

Nachstehend wird die Erfindung anhand eines bevorzugten Ausführungsbeispiels näher erläutert. Es zeigen:
- Figur 1: eine schematische, teilweise geschnittene Seitenansicht eines bevorzugten Ausführungsbeispiels einer erfindungsgemäßen Leuchtstofflampe
- Figur 2: eine ausschnittweise, schematische und teilweise geschnittene Darstellung des thermoplastischen Kunststoffsockelteils und des Lampengefäßes vor dem Einschmelzungsprozeß
- Figur 3: eine ausschnittweise, schematische und teilweise Darstellung des thermoplastischen Kunststoffsockelteils und des Lampengefäßes nach dem Einschmelzungsprozeß
- Figur 4: eine Draufsicht auf eine Durchführung durch das thermoplastische Kunststoffsockelteil gemäß eines zweiten Ausführungsbeispiels der Erfindung

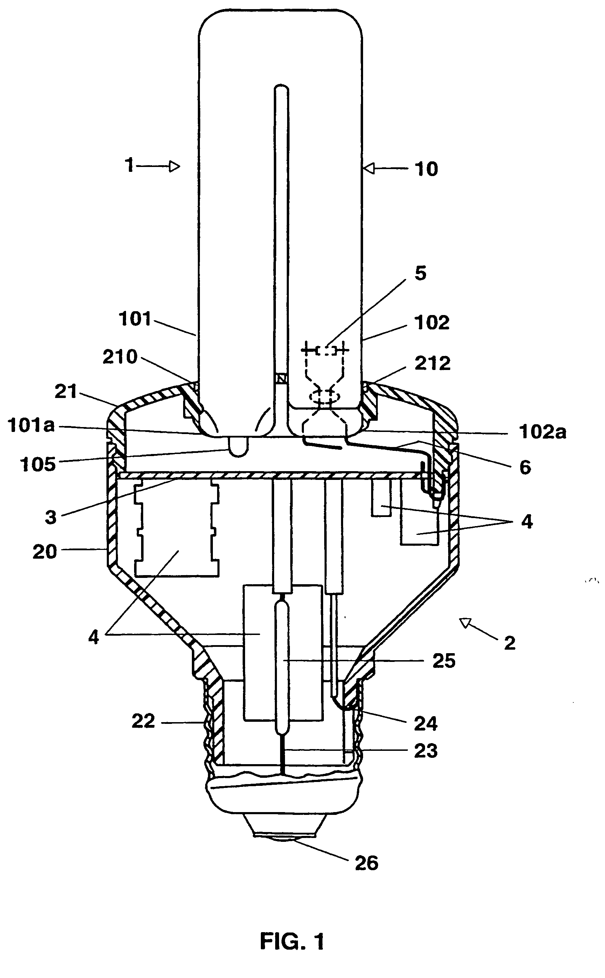

Das erfindungsgemäße Sockelungsverfahren wird nachstehend anhand einer Leuchtstofflampe, insbesondere anhand einer Kompakten Leuchtstofflampe, beschrieben. Die Anwendung des erfindungsgemäßen Sockelungsverfahren bietet bei kompakten Leuchtstofflampen die meisten Vorteile, ist aber nicht auf diesen Lampentyp beschränkt. Die Figur 1 zeigt eine erfindungsgemäße Leuchtstofflampe, bei der das erfindungsgemäße Sockelungsverfahren angewandt wurde. Es handelt sich bei dieser Leuchtstofflampe um eine sogenannte Kompakte Leuchtstofflampe, die in eine E27-Schraubsockelfassung als Ersatz für eine Allgebrauchsglühlampe eingesetzt werden kann.

Diese Leuchtstofflampe besitzt ein Entladungsgefäß 1, das aus zwei durch einen Quersteg (nicht abgebildet) miteinander verbundenen U-förmigen Glasrohren 10 besteht, von denen in der Seitenansicht der Figur 1 nur eines sichtbar ist. Das Entladungsgefäß 1 weist daher nur einen Entladungsraum auf. Außerdem besitzt die Leuchtstofflampe einen Kunststoffsockel 2, der aus einem topfartigen Unterteil 20 und einer Kappe 21 besteht. In dem Unterteil 20 ist eine Montageplatine 3 angeordnet, auf der fast alle Komponenten 4 eines Vorschaltgerätes zum Betrieb der Leuchtstofflampe befestigt sind. Das Unterteil ist ferner mit einer metallischen E27-Schraubsockelhülse 22 versehen. Die Stromversorgung des Vorschaltgerätes erfolgt mittels zweier Stromzuführungen 23, 24, von denen die erste 23 über eine Sicherung 25 mit dem Bodenkontakt 26 des Schraubsockels und die zweite mit der Sockelhülse 22 verbunden ist. Die Kappe 21 ist an dem Unterteil 21 befestigt und verschließt den Sockel 2. Sie 21 besteht aus dem thermoplastischen Kunststoff Polybutylenterephtalat B 4235 GF30. Dieser Kunststoff besitzt einen Glasfaseranteil von ungefähr 30 Prozent. Er weist eine Schmelztemperatur von 225 Grad Celsius auf und seine Erweichungstemperatur liegt bei 210 Grad Celsius. Die Kappe 21 weist vier Durchbrüche 210 auf, durch die jeweils ein Schenkel 101, 102 eines U-förmigen Glasrohres 10 hindurchgeführt ist. Die Schenkel 101, 102 weisen abgedichtete Enden 101a auf und bilden mit der Kappe 21 eine unlösbare Schmelzverbindung. Der Schenkel 101 ist mit einem Pumpstengel 105 versehen, der zum Evakuieren des Entladungsgefäßes 1 dient. Im Innenraum des Entladungsgefäßes 1 befinden sich zwei Lampenelektroden 5, die zur Erzeugung einer Niederdruckgasentladung dienen und die jeweils durch zwei aus dem Entladungsgefäß 1 herausragende Lampenstromzuführungen 6 mit dem Vorschaltgerät verbunden sind.

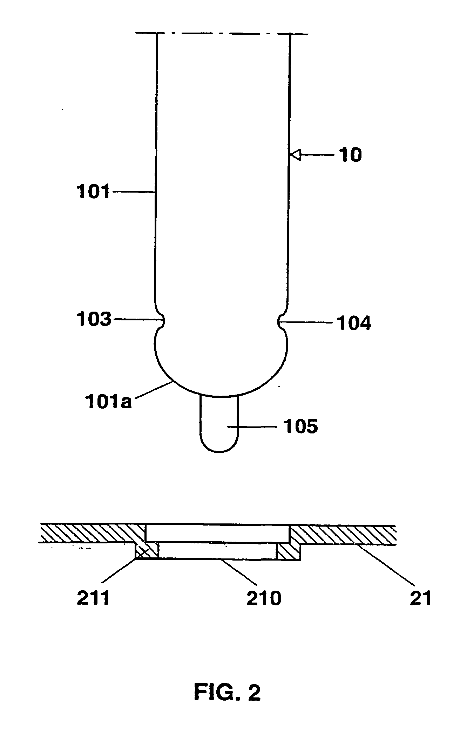

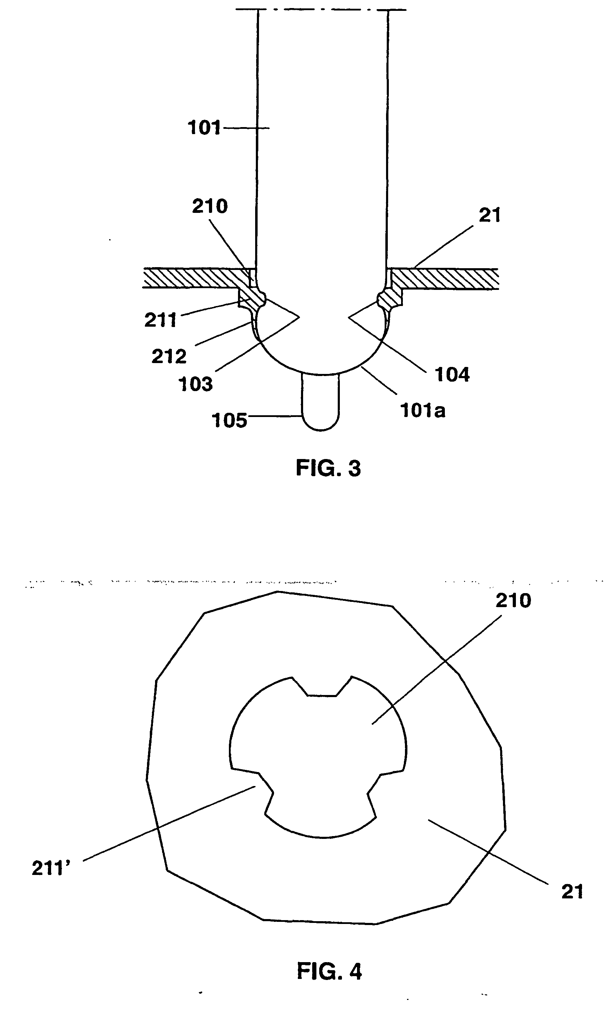

In den Figuren 2 und 3 ist ein Teil der Kappe 21 mit einem der vier Durchbrüche 210 dargestellt. Anhand dieser Figuren wird das erfindungsgemäße Sockelungsverfahren nachstehend näher beschrieben. Jeder Durchbruch 210 der Kappe 21 ist als kreisförmige Öffnung mit stufenartig verengtem Durchmesser ausgebildet. Auf der Außenseite der Kappe 21 ist der Durchmesser des Durchbruchs 210 geringfügig größer als der Außendurchmesser des Schenkels 101 des U-förmigen Glasrohres 10. Auf der Innenseite der Kappe 21 weist der Durchbruch 210 einen Durchmesser auf, der ungefähr um 0,6 mm kleiner als der Außendurchmesser des Schenkels 101 des U-förmigen Glasrohres 10 ist. Diese stufenartige Verengung des Durchbruches 210 wird durch einen ringförmigen Wulst 211 auf der Innenseite der Kappe 21 erzeugt. Der Schenkel 101 weist zwei einander gegenüberliegende Sicken 103, 104 auf.

Zur Fixierung des vorgefertigten, mit den Elektroden 5 versehenen und gasdicht verschlossenen Entladungsgefäßes 1 in der Kappe 21 wird die Kappe 21 auf eine Temperatur von ca. 150 Grad Celsius vorgewärmt und die Schenkel 101, 102 der U-förmigen Glasrohre 10 des vorgefertigten Entladungsgefäßes 1 werden im Bereich ihrer Enden 101 a, 102a auf eine Temperatur von ungefähr 350 Grad Celsius erhitzt. Die erhitzten Schenkel 101, 102 werden, von der Außenseite der Kappe 21 her, in die entsprechenden Öffnungen 210 der Kappe eingeführt. Durch den Kontakt mit den heißen Glaswänden der Schenkel 101, 102 erweicht und schmilzt das die Wülste 211 formende Kunststoffmaterial. Das erweichte und geschmolzene Kunststoffmaterial wird durch die in die Öffnungen 210 eindringenden Schenkel 101, 102 der U-förmigen Glasrohre 10 teilweise verdrängt. Dadurch werden die Durchbrüche 210 im Bereich der Wülste 211 aufgeweitet, so daß ihr Durchmesser dem Außendurchmesser der Schenkel 101, 102 entspricht. Die verdrängte Kunststoffschmelze bildet nach dem Erstarrenlassen einen die Schenkel 101, 102 formschlüssig umgebenden ringförmigen Kragen 212. Die Schenkel 101, 102 der U-förmigen Glasrohre 10 werden so tief in die Durchbrüche 210 eingeführt, daß die Sicken 103, 104 von der Kunststoffschmelze benetzt werden und nach dem Erstarrenlassen der Kunststoffschmelze in dem erstarrten Kunststoff der Wülste 211 oder der Kragen 212 eingebettet sind. Die Montage der Montageplatine 3 und der Komponenten 4 des Vorschaltgerätes in dem Unterteil 20 sowie das Anbringen der Sockelhülse 22 und deren Kontaktierung mit den Stromzuführungen 23, 24 erfolgt auf die übliche, bekannte Weise. Nach der Montage der Montageplatine 3 und der Komponenten 4 des Vorschaltgerätes wird die aus der Kappe 21 und dem Entladungsgefäß 1 bestehende Baueinheit mit dem Unterteil 20 verbunden.

Die Erfindung beschränkt sich nicht auf das oben näher erläuterte Ausführungsbeispiel. Beispielsweise kann die Kappe 21 anstelle der stufenartig verengten Durchbrüche 210 auch konisch verengte Durchbrüche aufweisen. Die Verengung der Durchbrüche 210 kann anstatt durch Wülste 211 auch mit Hilfe von sich radial in die jeweilige Durchführung 210 erstreckenden Stegen 211' oder Noppen (Figur 4) realisiert werden. Beim Einführen der erhitzten Abschnitte des Entladungsgefäßes 1 werden diese Stege 211' oder Noppen geschmolzen und die Kunststoffschmelze wird von dem eindringenden Entladungsgefäß 1 verdrängt. Nach dem Erstarren der Kunststoffschmelze ist das Entladungsgefäß 1 in der Kappe 21 eingeschmolzen. Ferner sei an dieser Stelle erwähnt, daß bereits ohne die Sicken 103, 104 eine Schmelzverbindung mit ausreichender Festigkeit erreicht wird. Die Sicken 103, 104 sind nur dann erforderlich, wenn eine außergewöhnlich hohe Festigkeit der Verbindung zwischen Entladungsgefäß und Sockel gewünscht wird.

Das erfindungsgemäße Sockelungsverfahren ist nicht auf Kompakte Leuchtstofflampen beschränkt, sondern kann beispielsweise auch auf stabförmige Leuchtstofflampen, die an ihren beiden Enden mit thermoplastischen Kunststoffsockelteilen ausgestattet sind, und auf Glühlampen, deren Sockel thermoplastische Kunststoffteile aufweisen, angewandt werden.

## Patentansprüche

1. Verfahren zur Sockelung einer elektrischen Lampe, die einen mit einem thermoplastischen Kunststoffsockelteil (21) versehenen Lampensockel (2), mindestens ein Lampengefäß (1) und mindestens ein in dem mindestens einen Lampengefäß (1) angeordnetes Leuchtmittel besitzt, wobei das Verfahren zum Einschmelzen des mindestens einen Lampengefäßes (1) in dem Kunststoffsockelteil (21) folgende Verfahrensschritte umfaßt:
- Erhitzen mindestens eines Abschnittes (101, 102) des mindestens einen Lampengefäßes (1) auf eine Temperatur, die mindestens so hoch wie die Erweichungstemperatur des thermoplastischen Kunststoffsockelteilmaterials und geringer als die Schmelztemperatur des Lampengefäßmaterials ist,
- Einführen des erhitzten mindestens einen Abschnittes (101, 102) in mindestens eine Aufnahme (210) des Lampensockels (2), wobei das Kunststoffmaterial des Kunststoffsockelteils (21) im Bereich der mindestens einen Aufnahme (210) durch den Kontakt mit dem mindestens einen erhitzten Abschnitt (101, 102) erweicht wird, und
- Erstarrenlassen des erweichten Kunststoffmaterials,
**dadurch gekennzeichnet, daß** das Verfahren folgende weiteren Verfahrensschritte umfasst:
- Ausstatten des mindestens einen Abschnittes (101, 102) mit mindestens einer Sicke (103, 104),
- Dimensionieren der mindestens einer Aufnahme (210) derart, dass deren Abmessungen kleiner als die entsprechenden Außenabmessungen des mit der mindestens einen Sicke (103, 104) versehenen Abschnitts (101, 102) sind,
- Einbetten der mindestens einen Sicke (103, 104) in dem erweichten Kunststoffmaterial während des Einführens des erhitzten mindestens einen Abschnittes (101, 102) in die mindestens eine Aufnahme (210).

2. Verfahren nach Anspruch 1, **dadurch gekennzeichnet, daß** der mindestens eine Abschnitt (101, 102) des mindestens einen Lampengefäßes (1) auf eine Temperatur erhitzt wird, die mindestens so hoch wie die Schmelztemperatur des thermoplastischen Kunststoffsockelteilmaterials ist.

3. Verfahren nach Anspruch 1, **dadurch gekennzeichnet, daß** das Kunststoffsockelteil (21) vor dem Einführen des bzw. der erhitzten Abschnitte (101, 102) des mindestens einen Lampengefäßes (1) in die mindestens eine Aufnahme (210) auf eine Temperatur, die oberhalb der Raumtemperatur und unterhalb der Erweichungstemperatur des Kunststoffsockelteilmaterials liegt, vorgewärmt wird.

4. Verfahren nach Anspruch 1, **dadurch gekennzeichnet, daß** das erweichte Kunststoffmaterial zum Erstarrenlassen gekühlt wird.

5. Verfahren nach Anspruch 4, **dadurch gekennzeichnet, daß** die Kühlung mittels eines Luftstroms erfolgt.

6. Verfahren nach Anspruch 1, **dadurch gekennzeichnet, daß** das verdrängte und erstarrte Kunststoffmaterial einen das mindestens eine Lampengefäß (1) ringförmig umschließenden Kragen (212) formt.

7. Verfahren nach Anspruch 1, **dadurch gekennzeichnet, daß**
- das mindestens eine Lampengefäß (1) aus mindestens einem U-förmigen Rohr (10) besteht und der bzw. die Abschnitte die Schenkel (101, 102) des mindestens einen U-förmigen Rohres (10) sind,
- die mindestens eine Aufnahme (210) als Vertiefung oder Durchbruch in dem Kunststoffsockelteil (21) geformt ist, und
- der Durchmesser der Vertiefung oder des Durchbruchs (210) kleiner als der Außendurchmesser der Schenkel (101, 102) des mindestens einen U-förmigen Rohres (10) ist.

8. Verfahren nach Anspruch 1, **dadurch gekennzeichnet, daß** das Kunststoffsockelteil (21) als Kappe eines topfartigen Lampensockels (2) geformt ist.

## Claims

1. Method for capping an electric lamp which has a lamp cap (2) provided with a thermoplastic synthetic cap part (21), at least one lamp vessel (1) and at least one illuminating means arranged in the at least one lamp vessel (1), the method for sealing the at least one lamp vessel (1) in the synthetic cap part (21) comprising the following method steps:
- at least one section (101, 102) of the at least lamp vessel (1) is heated to a temperature which is at least as high as the softening point of the thermoplastic synthetic cap part material and less than the melting temperature of the lamp vessel material,
- the at least one heated section (101, 102) is inserted into at least one holder (210) of the lamp cap (2), the synthetic material of the synthetic cap part (21) being softened in the region of the at least one holder (210) by contact with the at least one heated section (101, 102), and
- the softened synthetic material is allowed to set,
**characterized in that** the method comprises the following further method steps:
- providing the at least one section (101, 102) with at least one bead (103, 104),
- dimensioning the at least one holder (210) in such a way that its dimensions are smaller than the corresponding external dimensions of the section (101, 102) provided with the at least one bead (103, 104), and
- embedding the at least one bead (103, 104) in the softened plastic material during the insertion of the heated at least one section (101, 102) into the at least one holder (210).

2. Method according to Claim 1, **characterized in that** the at least one section (101, 102) of the at least one lamp vessel (1) is heated to a point which is at least as high as the melting point of the thermoplastic synthetic cap part material.

3. Method according to Claim 1, **characterized in that** before the heated section or sections (101, 102) of the at least one lamp vessel (1) is/are inserted into the at least one holder (210), the synthetic cap part (21) is preheated to a point which is above room temperature and below the softening point of the synthetic cap part material.

4. Method according to Claim 1, **characterized in that** the softened synthetic material is cooled to allow it to set.

5. Method according to Claim 4, **characterized in that** the cooling is performed by means of an air flow.

6. Method according to Claim 1, **characterized in that** the displaced and solidified synthetic material forms a collar (212) in the form of a ring around the at least one lamp vessel (1).

7. Method according to Claim 1, **characterized in that**
- the at least one lamp vessel (1) comprises at least one U-shaped tube (10), and the section or sections is/are the limbs (101, 102) of the at least one U-shaped tube (10),
- the at least one holder (210) is formed as a depression or cutout in the synthetic cap part (21), and
- the diameter of the depression or of the cutout (210) is smaller than the outside diameter of the limbs (101, 102) of the at least one U-shaped tube (10).

8. Method according to Claim 1, **characterized in that** the synthetic cap part (21) is formed as a cap of a pot-type lamp cap (2).

## Revendications

1. Procédé de culottage d'une lampe électrique qui a un culot (2) de lampe muni d'une partie (21) de culot en matière plastique thermoplastique, au moins une enceinte (1) de lampe et au moins un agent lumineux disposé dans la au moins une enceinte (1) de lampe, le procédé comprenant, pour sceller la au moins une enceinte (1) de lampe dans la partie (21) de culot en matière plastique, les stades de procédé suivants :
- on porte au moins un tronçon (101, 102) de la au moins une enceinte (1) de lampe à une température qui est au moins aussi haute que le point de ramollissement de la matière thermoplastique de la partie du culot en matière plastique et qui est plus basse que le point de fusion de la matière de l'enceinte de la lampe,
- on introduit le au moins un tronçon (101, 102) chauffé dans au moins un logement (210) du culot (2) de la lampe, la matière plastique de la partie (21) du culot en matière plastique se ramollissant dans la zone du au moins un logement (210) par le contact avec le au moins un tronçon (101, 102) chauffé, et
- on laisse se solidifier la matière plastique ramollie,
**caractérisé en ce que** le procédé comprend les stades de procédé supplémentaires suivants :
- on munit le au moins un tronçon (101, 102) d'au moins une moulure (103, 104),
- on donne au au moins un logement (210) des dimensions telles qu'elles sont plus petites que les dimensions extérieures correspondantes du tronçon (101, 102) muni de la au moins une moulure (103, 104),
- on incorpore la au moins une moulure (103, 104) dans la matière plastique ramollie pendant l'introduction du au moins un tronçon (101, 102) chauffé dans le au moins un logement (210).

2. Procédé suivant la revendication 1, **caractérisé en ce que** l'on porte le au moins un tronçon (101, 102) de la au moins une enceinte (1) de lampe à une température qui est au moins aussi haute que le point de fusion de la matière thermoplastique de la partie du culot en matière plastique.

3. Procédé suivant la revendication 1, **caractérisé en ce que** l'on préchauffe la partie (21) du culot en matière plastique avant l'introduction du ou des tronçons (101, 102) chauffés de la au moins une enceinte (1) de lampe dans le au moins un logement (210) à une température qui est supérieure à la température ambiante et inférieure au point de ramollissement de la partie du culot en matière plastique.

4. Procédé suivant la revendication 1, **caractérisé en ce que** l'on refroidit la matière plastique ramollie pour la faire se solidifier.

5. Procédé suivant la revendication 4, **caractérisé en ce que** l'on effectue le refroidissement au moyen d'un courant d'air.

6. Procédé suivant la revendication 1, **caractérisé en ce que** la matière plastique refoulée et solidifiée forme un collet (212) entourant annulairement la au moins une enceinte (1) de lampe.

7. Procédé suivant la revendication 1, **caractérisé en ce que**
- la au moins une enceinte (1) de lampe est en au moins un tube en forme de U et le ou les tronçons sont les branches (101, 102) du au moins un tube (10) en forme de U,
- le au moins un logement (210) est ménagé sous la forme d'une cavité ou d'un passage dans la partie (21) du culot en matière plastique, et
- le diamètre de la cavité ou du passage (210) est plus petit que le diamètre extérieur des branches (101, 102) du au moins un tube (10) en forme de U.

8. Procédé suivant la revendication 1, **caractérisé en ce que** la partie (21) du culot en matière plastique est sous la forme d'un capuchon d'un culot (2) de lampe en forme de godet.
